# EUROPÄISCHE PATENTANMELDUNG

(11) **EP 1 610 233 A1**
(43) Veröffentlichungstag der Anmeldung: **28.12.2005**
(21) Anmeldenummer: 04014586.4
(22) Anmeldetag: 22.06.2004
(51) Int. Cl.: G06F 17/30

(54) **Verfahren zur automatischen Synchronisierung eines computergestützten Dateisystems auf einer Mehrzahl von computern**

(71) Anmelder: SNAP Innovation Softwareentwicklungsgesellschaft mbH, 22767 Hamburg (DE)
(72) Erfinder: McCullagh, Paul, DE-22941 Bargteheide (DE)
(74) Vertreter: UEXKÜLL & STOLBERG

(57) **Zusammenfassung**

Die Erfindung betrifft ein Verfahren zur automatischen Synchronisierung eines computergestützten Dateisystems, das auf einer Mehrzahl von über ein zeitweise über ein Netzwerk verbundenen Computern, die jeweils das Dateisystem lokal gespeichert halten, bearbeitet wird, wobei die Computer dazu vorbereitet sind, wiederholungskonsistente Transaktionen auf dem Dateisystem auszuführen. Um allen das Arbeiten mit der aktuellen Version des Dateisystems zu ermöglichen, ist vorgesehen, dass in einem zentralen Transaktionsprotokoll jede Transaktion (T₁, T₂' ...Tᵢ) auf dem Dateisystem fortlaufend aufgezeichnet wird, wobei darin neben jeder Transaktion eine aufsteigende Transaktionskennung (TNR) und etwaige von der Transaktion betroffene Datensätze (D₁, D₂, ...Dᵢ) oder Adressen, die den Zugriff auf diese erlauben, gespeichert werden, und wobei für jeden Computer als Statuskennung (ST) die Transaktionskennung (TNR) gespeichert wird, die der letzten von dem jeweiligen Computer auf seinem lokalen Dateisystem ausgeführten Transaktion entspricht, wobei jeder Computer so vorbereitet ist, um bei Betrieb ohne Netzwerkverbinung ein lokales Transaktionsprotokoll von auf seinem lokalen Dateisystem durchgeführten Transaktionen zu erzeugen und dieses bei der nächsten Verbindungsaufnahme mit dem Netzwerk an das zentrale Transaktionsprotokoll anzuhängen und ferner das zentrale Transaktionsprotokoll ab der Transaktionskennung, die der für ihn geltenden Statuskennung entspricht, zu lesen und diese Transaktionen auf dem lokalen Dateisystem auszuführen.

## Beschreibung

Die vorliegende Erfindung betrifft ein Verfahren zur automatischen Synchronisierung eines computergestützten Dateisystems, das auf einer Mehrzahl von über ein Netzwerk verbundenen Computern, die jeweils das Dateisystem lokal gespeichert halten, bearbeitet wird, wobei jeder Computer zeitweise, aber nicht permanent mit dem Netzwerk verbunden ist, und jeder Computer dazu vorbereitet ist wiederholungskonsistente Transaktionen auf dem Dateisystem vorzunehmen.

Als Transaktion bezeichnet man in EDV-Systemen eine Folge von Verarbeitungsschritten, die nur gemeinsam oder gar nicht durchgeführt werden dürfen. Transaktionale Änderungen an Datenbeständen dürfen also erst dauerhaft gespeichert werden, wenn die Transaktion vollständig durchlaufen ist. Außerdem müssen sie einen konsistenten Zustand erzeugen. Wird die Bearbeitung aus irgendeinem Grunde vor Erreichen des Transaktionsendes abgebrochen, so muss der Datenbestand auf den Zustand vor Beginn der Transaktion zurückgesetzt werden. Transaktionen müssen also folgende vier Kriterien erfüllen: Atomizität, Konsistenz, Isolation und Dauerhaftigkeit (englisch: ACID).

Die vorliegende Erfindung bezieht sich auf Transaktionen, die noch eine weitere Bedingung erfüllen und die als wiederholungskonsistente Transaktionen bezeichnet werden. Diese weitere Eigenschaft besteht darin, dass das sich ergebende Dateisystem gleichbleibt, auch wenn eine gegebene Transaktion Tᵢ, die zu einem gegebenen Zeitpunkt ausgeführt wird, bereits zu einem früheren Zeitpunkt einmal oder mehrfach ausgeführt worden ist.

In vielen Unternehmen, aber auch im privaten Bereich werden heute Gruppen von Computern durch lokale Netzwerke oder über andere Netzwerkverbindungen zusammengeschlossen. Oft soll ein Team gemeinsam an einem Dateisystem arbeiten können. Unter Dateisystem wird hier allgemein eine Menge von Dateien, Datenbanken, Programmen, Text- und Bilddateien etc. (zusammenfassend im folgenden als Datensätze bezeichnet) verstanden, die z.B. zu einem Projekt gehören, das von einer Mehrzahl von Benutzern bearbeitet wird, die über eine Mehrzahl von Computern zeitweilig miteinander verbunden sind.

Dabei besteht auch der Bedarf sich z.B. mit einem Laptop über das Internet an ein gemeinsames Dateisystem anschließen zu können und dieses bearbeiten zu können. Eine klassische Architektur für einen solchen Verbund von Computern, die zeitweise, aber nicht permanent über ein Netzwerk in Verbindung stehen, ist ein Client-Server-System, bei dem das interessierende Dateisystem in dem Server-Computer gespeichert ist und Änderungen in dem Dateisystem von Client-Computern ausgeführt werden können. Dabei bleibt das Dateisystem in dem Server-Computer gespeichert und die Client-Computer ändern Daten in dem Dateisystems des Server-Computers bzw. greifen auf das Dateisystem darin nach Bedarf zu. Eine solche Lösung bedingt jedoch, dass ein Benutzer, der an dem Dateisystem arbeiten oder auf dieses nur zugreifen will, mit dem Server-Computer verbunden sein muss, was das System unflexibel macht, da gerade erwünscht sein kann, dass einzelne Benutzer beispielsweise mit einem Laptop mit dem Dateisystem arbeiten können, auch wenn keine Verbindung zu dem Server-Computer besteht.

Die letztere Möglichkeit, mit dem Dateisystem ohne Verbindung mit einem Server zu arbeiten, d.h. Daten zu lesen und zu verändern, besteht grundsätzlich nur, wenn das Dateisystem in dem einzelnen Computer auch lokal gespeichert vorliegt. Dann besteht für jeden Benutzer die Möglichkeit mit dem Dateisystem zu arbeiten, unabhängig von der Frage, ob eine Verbindung zu den Server-Computern oder anderen Computern besteht. Daraus ergibt sich aber natürlich das Problem, dass ein Abgleich der einzelnen lokalen Dateisysteme erfolgen muss, damit alle zu einer Gruppe von Benutzern gehörigen Computer eine aktuelle Version des Dateisystems zur Verfügung haben, in dem auch die Änderungen und Ergänzungen, die von anderen Benutzern auf deren Computern durchgeführt worden sind, enthalten sind. Eine solche Aktualisierung ließe sich z.B. dadurch bewirken, dass jeder Benutzer bei Verbindungsaufnahme mit dem Netzwerk sich das gesamte Dateisystem in der aktuellen Version herunterlädt. Bei großen Dateisystemen ist dies aber nicht praktikabel, wenn die jeweils zu übertragenen Datenmengen zu groß ist.

Es ist Aufgabe der vorliegenden Erfindung, ein Verfahren zur automatischen Synchronisierung eines computergestützten Dateisystems, das auf einer Mehrzahl von nur zeitweise über ein Netzwerk verbundenen Computern bearbeitet wird, anzugeben.

Zur Lösung dieser Aufgabe dienen die kennzeichnenden Merkmale des Patentanspruchs 1. Vorteilhafte Ausführungsformen sind in den Unteransprüchen angegeben.

Gemäß der Erfindung ist vorgegeben, dass ein zentrales Transaktionsprotokoll, in dem jede Transaktion, die von irgendeinem aus der Mehrzahl der Computer auf dem Dateisystem ausgeführt wird, fortlaufend aufgezeichnet wird. Darin wird für jeden Eintrag neben der Transaktion eine aufsteigende Transaktionskennung und ein oder mehrere von der Transaktion betroffene Datensätze oder Adressen, die den Zugriff auf diese erlauben, gespeichert. Die aufsteigende Transaktionskennung könnte eine fortlaufende Nummerierung sein, allerdings kann auch jede andere Folge von Kennungen angewendet werden, bei der zu jeder Kennung ein Nachfolger angebbar ist und die insofern auf die natürlichen Zahlen abbildbar ist. Ferner wird auf jedem Computer eine Statuskennung gespeichert, die der Transaktionskennung im zentralen Transaktionsprotokoll angibt, die der letzten von dem jeweiligen Computer auf seinem lokalen Dateisystem ausgeführten Transaktion dort zugeordnet worden ist. Jeder Computer ist so vorbereitet, um bei Betrieb ohne Netzwerkverbindung ein lokales Transaktionsprotokoll der auf seinem lokalen Dateisystem durchgeführten Transaktionen zu erzeugen und dieses bei der nächsten Verbindungsaufnahme mit dem Netzwerk an das zentrale Transaktionsprotokoll anzuhängen, wobei die lokalen Transaktionskennungen in zentrale Transaktionskennungen umgewandelt werden. Ferner ist jeder Computer so vorbereitet, um bei jeder erneuten Verbindungsaufnahme mit dem Netzwerk das zentrale Transaktionsprotokoll ab derjenigen Transaktion, deren Transaktionskennung seiner Statuskennung entspricht, zu lesen und etwaige hinzugekommene Transaktionen auf seinem lokalen Dateisystem auszuführen.

In einer vorteilhaften Ausführungsform prüft jeder Computer beim Lesen des zentralen Transaktionsprotokolls bei jeder Transaktion, ob diese von ihm selbst initiiert worden ist. Diese Prüfung kann durchgeführt werden, indem nach der Übertragung von Einträgen aus dem lokalen Transaktionsprotokoll in das zentrale Transaktionskennung diese im lokalen Transaktionsprotokoll nicht gelöscht, sondern darin nur als übertragen markiert und die zu dieser übertragenen gehörige zentrale Transaktionskennung dem Eintrag auch im lokalen Transaktionsprotokoll zugeordnet wird. Beim Lesen der Kopfdaten (wozu insbesondere die Transaktionskennung gehört) eines solchen zentralen Transaktionsprotokolleintrags kann dann geprüft werden, ob die aus dem zentralen Transaktionsprotokoll gelesene Transaktionskennung mit derjenigen eines Eintrag im lokalen Transaktionsprotokoll übereinstimmt. Wenn dadurch festgestellt ist, dass die fragliche Transaktion ursprünglich von dem Computer selbst ausgeführt worden ist, brauchen etwaige zu der Transaktion gehörige Datensätze nicht erneut aus dem zentralen Transaktionsprotokoll geholt zu werden, sondern die fragliche Transaktion wird einfach auf den lokalen Datensätzen des Computers noch einmal ausgeführt. Dadurch wird die fragliche Transaktion im Grunde wiederholt, was nicht in allen Fällen notwendig ist; dies erfolgt aber trotzdem, da es möglich ist, dass zwischenzeitlich, d.h. seit der ursprünglichen Ausführung der Transaktion, Datensätze durch andere Transaktionen geändert worden sind. Auf diese Weise wird mit Sicherheit erreicht, dass alle Änderungen auf allen Computern zu dergleichen aktuellen Version des Dateisystems führen. Andererseits wird bei dieser Ausführungsform auf das erneute Holen der von der fraglichen Transaktion betroffenen Datensätze durch den Computer verzichtet, wodurch die von der Zentralrechner zu übertragende Datenmenge reduziert wird.

Mit dem erfindungsgemäßen Verfahren können alle Benutzer einer Gruppe mit ihren Computern mit der jeweils aktuellen Version des Dateisystems arbeiten, wobei keine dauernde Verbindung mit den anderen Computern bestehen muss. Dadurch wird die Flexibilität und effektive Arbeitsmöglichkeit für die Benutzer wesentlich erhöht.

In einer vorteilhaften Ausführungsform wird das Transaktionsprotokoll in einem Zentralrechner geführt, der ständig eingeschaltet ist und zur Verbindungsaufnahme durch andere Computer bereit ist.

Es entspricht die Statuskennung in jedem Computer der Nummer der Transaktion, die er bei der letzten Verbindungsaufnahme mit dem Netzwerk aus dem Transaktionsprotokoll gelesen und ausgeführt hat.

In seltenen Fällen kann es bei dem vorgesehenen Verfahren zu Kollisionen kommen, wenn nämlich zwei Computer "gleichzeitig" Transaktionen auf bestimmten Daten durchführen, die miteinander unverträglich sind. Wenn z.B. zwei Benutzer nicht mit dem Netzwerk verbunden sind und in ihrem lokalen Dateisystem der eine z.B. ein Datenfeld vollständig löscht, während der andere diesem Datenfeld neue Daten zuweist, so kommt es bei der nachfolgenden Abarbeitung zu einer Kollision, wenn die Transaktionen des ersten und danach die Transaktionen des zweiten durchgeführt werden. In einem solchen Fall sollten beide Computer über die Kollision informiert werden.

Ferner soll auf beiden Computern die Möglichkeit gegeben sein, die Kollision aufzulösen, indem die Dateien manuell integriert werden und zu neuen aktuellen Versionen zusammengeführt werden.

Um zu gewährleisten, dass die Versionen nicht versehentlich überschrieben werden können, können alle Versionen auf allen verbundenen Computern gespeichert werden. Die verschiedenen Versionen der Dateien können dabei entweder als Gesamtdatei gespeichert sein oder als sogenannte Delta-Datei, die nur Unterschiede zu einer anderen Version enthält. Die verschiedenen Versionen zu einer Datei werden in einem sogenannten Versionsbaum dargestellt. Jede Version, außer der ersten hat dabei eine Vorgängerversion. In dem Fall, dass eine Version als Integration aus zwei Vorgängerversionen hervorgegangen ist, wird zu einer Version zusätzlich ein Verweis auf eine zweite Vorgängerversion gespeichert.

Der Zentralrechner wird üblicherweise ein Server sein. Grundsätzlich ist es aber auch möglich, die Zentralrechnerfunktion auf einem an der Gruppe beteiligten Computer zu implementieren.

Die Erfindung wird im Folgenden in Verbindung mit den Zeichnungen beschrieben, in denen:
Figur 1 eine schematische Darstellung einer Mehrzahl von Computern und des Transaktionsprotokolls zeigt;
Figur 2, 3 und 4 Flussdiagramme zeigen, die Abfolge von Schritten gemäß des vorliegenden Verfahrens illustriert.

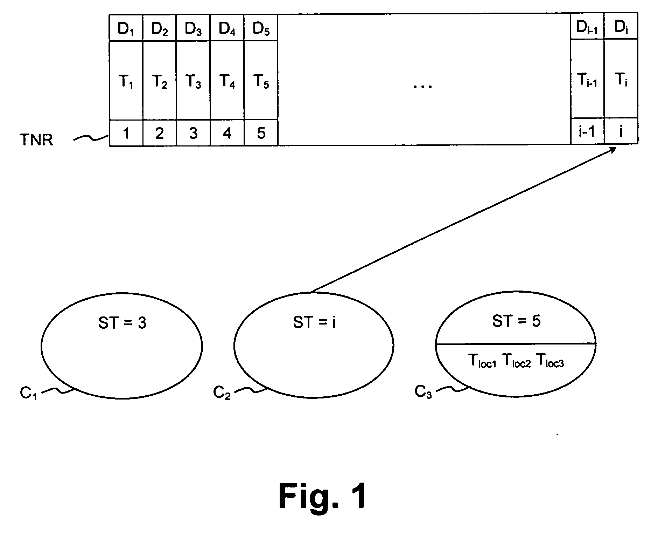

In Figur 1 ist das Transaktionsprotokoll schematisch als zweidimensionales Datenfeld dargestellt, wobei darin eine Transaktionskennung TNR, eine jeweilige Transaktion Tᵢ und ein oder mehrere Datensätze Dᵢ gespeichert werden, auf die Transaktion Tᵢ einwirkt. Dabei müssen nicht die Datensätze selbst in dem Transaktionsprotokoll enthalten sein, sondern diese müssen nur durch Adresse eindeutig identifiziert sein, so dass ein Zugriff auf die Datensätze möglich ist. Eine solche Adresse kann auf einen lokal gespeicherten Datensatz verweisen oder eine URL Adresse sein, die den Zugriff auf Daten eines anderen Computers ermöglicht. Es sind in diesem Beispiel drei Computer C₁, C₂ und C₃ dargestellt.

Der Computer C₁ hat die Statuskennung ST=3. Er steht zur Zeit nicht mit dem Netzwerk in Verbindung, und die von dem Computer C₃ durchgeführte Transaktion T₃ ist die letzte Transaktion, die der Computer C₁ auf seinem lokalen Dateisystem durchgeführt hat.

Der Computer C₃ ist ebenfalls nicht im Netz und hat zuletzt Netzverbindung gehabt, als Transaktion mit der Transaktionskennung TNR = 5 die zuletzt durchgeführte Transaktion war.

Der Computer C₂ hat Verbindung mit dem Netzwerk und hat gerade eine Transaktion Tᵢ mit der TNR = i durchgeführt.

Mit dem Computer C₃ wurde, während er nicht mit dem Netzwerk in Verbindung war, das Dateisystem bearbeitet. Der Benutzer hat in diesem Beispiel auf seinem Computer in dem lokalen Dateisystem die Transaktionen T_{LOC 1}, T_{LOC 2} und T_{LOC 3} durchgeführt und ein lokales Transaktionprotokoll für diese Transaktionen gespeichert, dessen Format mit dem zentralen Transaktionsprotokoll übereinstimmt. Wenn der Computer C₃ nun Verbindung mit dem Netzwerk aufnimmt, wird er seine lokalen Transaktionen T_{LOC 1} bis T_{LOC 3} übertragen und sie an das zentrale Transaktionsprotokoll anhängen. Den Transaktionen T_{LOC 1} bis T_{LOC 3} werden im zentralen Transaktionsprotokoll die Transaktionskennungen TNR = i+1, i+2 und i+3 zugeordnet. Es ist bevorzugt, dass der Computer C₃ die übertragenen Transaktionen in seinem lokalen Transaktionsprotokoll als übertragen markiert und die lokalen Transaktionskennungen T_{LOC 1} bis T_{LOC 3} durch die zentralen Transaktionskennungen TNR = i+1, i+2 und i+3 ersetzt.

Bei Verbindung mit dem Netzwerk prüft Computer C₃ weiterhin, ob in dem Transaktionsprotokoll hinter der Transaktion mit der seiner Statuskennung ST entsprechenden Transaktionskennung TNR = 5 inzwischen weitere Transaktionen vorhanden sind. Wenn dies wie im vorliegenden Beispiel der Fall ist, liest der Computer C₃ die weiteren Transaktionen T₄ bis Tᵢ₊₃ und führt diese auf seinem lokalen Dateisystem aus und aktualisiert seine Statuskennung ST auf i+3.

Eine Besonderheit ergibt sich hier, wenn der Computer C₃ auf die Transaktion Tᵢ₊₁ trifft, die er selbst initiert und lokal auf seinem Dateisystem bereits ausgeführt hat. Grundsätzlich wäre es möglich, dass der C₃ die Transaktion einfach noch einmal ausführt, was aufgrund der wiederholungskonsistenten Eigenschaft der Transaktionen zu keinen Veränderungen führen würde. Es ist jedoch bevorzugt, dass der Computer prüft, ob die Transaktion Tᵢ₊₁ bereits lokal von ihm selbst ausgeführt worden ist. Dies kann z.B. dadurch geschehen, dass C₃ aus dem zentralen Transaktionsprotokoll zunächst nur die Transaktionskennung TNR = i+1 und die Transaktion liest und prüft, ob im lokalen Transationsprotokoll ein Eintrag mit der Transaktionskennung Tᵢ₊₁ vorhanden ist. Wenn das der Fall ist, werden die von der Transaktion Tᵢ betroffenen Datensätze Dᵢ nicht über das zentrale Transaktionsprotokoll noch einmal geholt, sondern C₃ für die Transaktion Tᵢ₊₁ einfach auf seiner lokalen Version D^{loc}ᵢ₊₁ aus, was die zu übertragende Datenmenge reduziert, da die Datensätze nicht von dem Zentralrechner zu C₃ übertragen werden müssen. Die nochmalige Ausführung der Transaktion Tᵢ₊₁ auf C₃ wird in vielen Fällen das Ergebnis nicht verändern, ist aber grundsätzlich sinnvoll, da von der Transaktion Tᵢ₊₁ betroffene Datensätze Dᵢ₊₁ zwischenzeitlich, d.h. seit der ursprünglichen lokalen Ausführung der Transaktion T_{LOC 1}, von anderen Computern in einer Weise geändert worden sein könnten, die Wirkung der Transaktion ganz oder teilweise aufhebt. Anstatt aufwendig zu prüfen, ob eine solche zwischenzeitliche Änderung stattgefunden hat, wird die Transaktion Tᵢ₊₁ einfach in jedem Fall noch einmal ausgeführt, was weniger aufwendig ist.

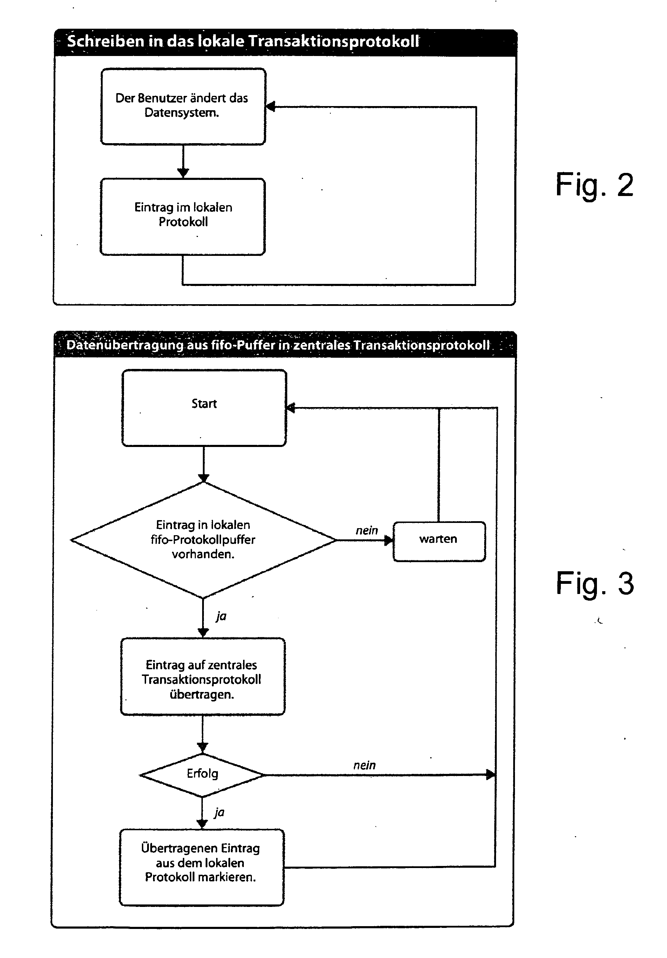

Figur 2 zeigt schematisch die Schrittfolge des Prozesses, der lokal initiierte Transaktionen in ein lokales Transaktionsprotokoll einträgt. Im ersten Schritt ändert der Benutzer einen Datensatz des Dateisystems. Dazu wird dann jeweils ein Eintrag in seinem lokalen Transaktionsprotokoll erzeugt, dessen Format mit dem des oben beschriebenen zentralen Transaktionsprotokolls übereinstimmt.

Figur 3 zeigt die Schrittfolge des Prozesses, wenn der Computer, nachdem er lokal Transaktionen ausgeführt hat, mit dem Netzwerk und dem Zentralrechner Verbindung hat. Dann wird geprüft, ob noch ein Eintrag in dem lokalen Transaktionsprotokoll vorhanden ist. Wenn ja, wird dieser an das zentrale Transaktionsprotokoll angehängt, wobei eine neue zentrale Transaktionskennung vergeben wird und in das zentrale Transaktionsprotokoll zu dieser übertragenen Transaktion geschrieben wird. Dann kann die an das zentrale Transaktionsprotokoll angehängte Transaktion in dem lokalen Transaktionsprotokoll als übertragen markiert werden, wobei bevorzugt auch die zentrale Transaktionskennung in das lokale Transaktionsprotokoll übernommen wird.

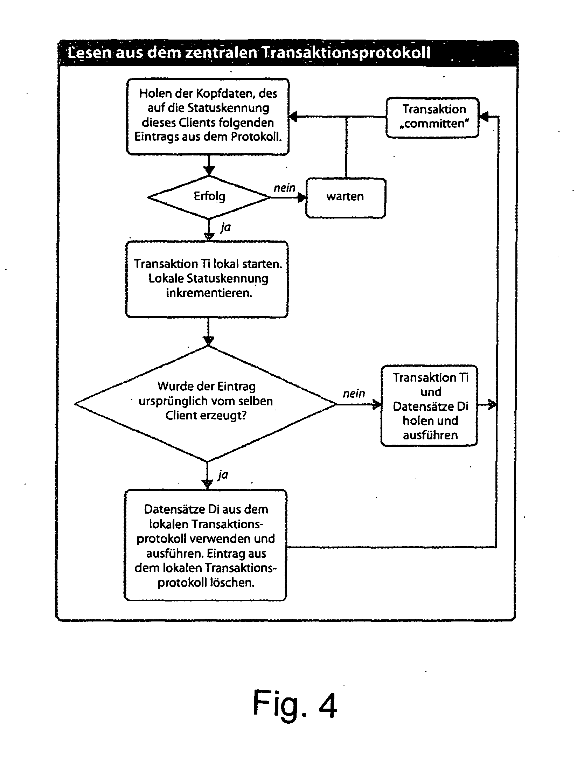

Figur 4 zeigt schematisch die Schrittfolge des Prozesses beim Lesen des zentralen Transaktionsprotokolls. Im ersten Schritt werden die Kopfdaten des Eintrags mit der Transaktionskennung, die auf die Statuskennung des betroffenen Computers folgt, aus dem Protokoll gelesen. Dann wird die Transaktion lokal gestartet und festgestellt, ob der gegenwärtige Eintrag des Transaktionsprotokolls von demselben Computer erzeugt worden ist. Dies kann wie oben bereits beschrieben dadurch erfolgen, dass die aus dem zentralen Transaktionsprotokoll gelesene Transaktionskennung in dem lokalen Transaktionsprotokoll gesucht wird. Wenn die Transaktionskennung lokal nicht vorhanden ist, stammt die Transaktion von einem anderen Computer. Dann werden die Transaktionsdaten Tᵢ und etwa von der Transaktion Tᵢ betroffene Datensätze Dᵢ von dem Zentralrechner abgerufen und die Transaktion ausgeführt. Ist die fragliche Transaktion Tᵢ allerdings von demselben Computer ursprünglich ausgeführt und in das zentrale Transaktionsprotokoll geschrieben worden, so werden die von der Transaktion betroffenen Datensätze Dᵢ aus dem lokalen Transaktionsprotokoll geholt und die Transaktion Tᵢ ausgeführt. Danach wird dieser Eintrag aus dem lokalen Transaktionsprotokoll gelöscht.

## Patentansprüche

1. Verfahren zur automatischen Synchronisierung eines computergestützten Dateisystems, das auf einer Mehrzahl von über ein Netzwerk verbundenen Computern, die jeweils das Dateisystem lokal gespeichert halten, bearbeitet wird, wobei jeder Computer zeitweise, aber nicht permanent mit dem Netzwerk verbunden ist und die Computer dazu vorbereitet sind, wiederholungskonsistente Transaktionen auf dem Dateisystem auszuführen, **dadurch gekennzeichnet, dass** in einem zentralen Transaktionsprotokoll jede Transaktion (T₁, T₂, ...Tᵢ) auf dem Dateisystem fortlaufend aufgezeichnet wird, wobei darin neben jeder Transaktion eine aufsteigende Transaktionskennung (TNR) und etwaige von der Transaktion betroffene Datensätze (D₁, D₂, ...Dᵢ) oder Adressen, die den Zugriff auf diese erlauben, gespeichert werden, und wobei für jeden Computer als Statuskennung (ST) die Transaktionskennung (TNR) gespeichert wird, die der letzten von dem jeweiligen Computer auf seinem lokalen Dateisystem ausgeführten Transaktion entspricht, wobei jeder Computer so vorbereitet ist, um bei Betrieb ohne Netzwerkverbinung ein lokales Transaktionsprotokoll von auf seinem lokalen Dateisystem durchgeführten Transaktionen zu erzeugen und dieses bei der nächsten Verbindungsaufnahme mit dem Netzwerk an das zentrale Transaktionsprotokoll anzuhängen und ferner das zentrale Transaktionsprotokoll ab der Transaktionskennung, die der für ihn geltenden Statuskennung entspricht, zu lesen und diese Transaktionen auf dem lokalen Dateisystem auszuführen.

2. Verfahren nach Anspruch 1, **dadurch gekennzeichnet, dass** jeder Computer so vorbereitet ist, beim Lesen der Einträge im zentralen Transaktionsprotokoll zu jeder Transaktion zu prüfen, ob diese von ihm selbst bewirkt worden ist, und, wenn dies der Fall ist, die von der Transaktion betroffenen Datensätze nicht vom zentralen Transaktionsprotokoll abgefordert werden, sondern die Transaktion auf den lokalen betroffenen Datensätzen ausgeführt wird.

3. Verfahren nach Anspruch 2, **dadurch gekennzeichnet, dass** bei der Übertragung eines Eintrags aus dem lokalen Transaktionsprotokoll an das zentrale Transaktionsprotokoll eine auf die Transaktionskennung des vor der Übertragung letzten Eintrags folgende zentrale Transaktionskennung vergeben und dem übertragenen Eintrag im zentralen Transaktionsprotokoll zugeordnet wird, wobei diese zentrale Transaktionskennung zu dem übertragenen Transaktionsprotokolleintrag auch in dem lokalen Transaktionprotokoll gespeichert wird.

4. Verfahren nach Anspruch 3, **dadurch gekennzeichnet, dass** jeder Computer so vorbereitet ist, die Prüfung beim Lesen eines Eintrags aus dem zentralen Transaktionsprotokoll, ob diese von ihm selbst bewirkt worden ist, **dadurch** auszuführen, dass untersucht wird, ob die zentrale Transaktionskennung auch bei einem Eintrag im lokalen Transaktionsprotokoll vorhanden ist.

5. Verfahren nach einem der vorhergehenden Ansprüche, **dadurch gekennzeichnet, dass** das Transaktionsprotokoll in einem Zentralrechner geführt wird, der ständig eingeschaltet und zur Verbindungsaufnahme durch andere Computer bereit ist.

6. Verfahren nach einem der Ansprüche 1 bis 4, **dadurch gekennzeichnet, dass** das Transaktionsprotokoll in einem aus der Mehrzahl der Computer geführt wird.
